# FASCICULE DE BREVET EUROPEEN

(11) **EP 1 734 297 B1**
(45) Date de publication et mention de la délivrance du brevet: **05.03.2008**
(21) Numéro de dépôt: 06356065.0
(22) Date de dépôt: 09.06.2006
(51) Int. Cl.: F16K 31/06, F16K 27/00

(54) **Electrovanne avec élément de fixation rapporté**
Elektromagnetventil mit Befestigungseinrichtung
Solenoid valve with attachment means

(30) Priorité: 14.06.2005 FR 0506242
(43) Date de publication de la demande: 20.12.2006
(73) Titulaire: BONTAZ CENTRE, F-74460 Marnaz (FR)
(72) Inventeur: Chavanne, Samuel, 74440 Mieussy (FR)
(74) Mandataire: Poncet, Jean-François

(56) Documents cités:
- EP-A- 0 654 627
- DE-A1- 3 814 156
- US-A- 4 578 662
- US-A1- 2004 113 112
- PATENT ABSTRACTS OF JAPAN vol. 2000, no. 08, 6 octobre 2000 (2000-10-06) -& JP 2000 136888 A (NIDEC TOSOK CORP), 16 mai 2000 (2000-05-16)

## Description

### DOMAINE TECHNIQUE DE L'INVENTION

La présente invention concerne les électrovannes pour la commande de débit d'un fluide dans un circuit hydraulique, telles que les électrovannes utilisées pour commander le débit de liquide de refroidissement et de lubrification de pistons dans les moteurs de véhicules automobiles.

De façon générale, et comme décrit par exemple dans les documents JP 2000-136888 A, US 2004/0113112 A1 ou US 4,578,662 A, les électrovannes pour la commande de débit d'un fluide dans un circuit hydraulique comprennent :
- un corps de vanne, ayant au moins un passage de fluide, un obturateur pour autoriser ou empêcher le débit de fluide dans le passage de fluide, et une liaison mécanique pour actionner l'obturateur,
- un actionneur électromagnétique, agencé pour actionner la liaison mécanique,
- un accouplement entre l'actionneur électromagnétique et le corps de vanne, par une enveloppe entourant l'actionneur électromagnétique et en prise sur un épaulement saillant du corps de vanne, qui maintient l'actionneur électromagnétique en engagement axial contre le corps de vanne selon une direction d'engagement.

Le corps de vanne est généralement cylindrique, pour être engagé et fixé de façon étanche dans un logement prévu dans un bloc hydraulique où circule le fluide à commander. L'actionneur électromagnétique dépasse habituellement du bloc hydraulique, et est retenu par son accouplement au corps de vanne. L'accouplement par une enveloppe en prise sur un épaulement saillant du corps de vanne permet la fixation d'un actionneur magnétique de puissance suffisante, dont le diamètre extérieur est pour cela supérieur à celui du corps de vanne.

Ce mode d'accouplement entre le corps de vanne et l'actionneur électromagnétique, par un épaulement saillant, se révèle être de réalisation coûteuse, tant en matière utilisée qu'en main-d'oeuvre et en temps-machine.

Pour réaliser un épaulement saillant sur le corps de vanne, qui est généralement une pièce de révolution, il est nécessaire de partir d'une pièce d'un diamètre extérieur égal ou légèrement supérieur au diamètre externe de l'épaulement, et d'usiner cette pièce sur la quasi-totalité de sa longueur afin de diminuer sensiblement son diamètre extérieur.

Cette opération peut notamment être réalisée au moyen d'un tour.

On obtient ainsi une ébauche de corps de vanne monobloc par l'enlèvement d'une grande quantité de matière, l'épaulement n'étant en général présent que sur une très faible longueur du corps de vanne final.

Afin que le corps de vanne présente une qualité géométrique et dimensionnelle nécessaire et suffisante pour assurer son engagement étanche dans un bloc hydraulique, une rectification est nécessaire sur toute sa longueur.

Du fait de la présence de l'épaulement saillant, il est nécessaire de recourir à une rectification en plongée. La rectification en plongée s'effectue par une avance radiale de la meule de rectification, avance radiale qui diffère selon les cas où la meule vient rectifier l'épaulement et les cas où la meule vient rectifier la partie du corps de vanne dont le diamètre a précédemment été réduit lors de l'ébauche. De multiples passes sont ensuite nécessaires du fait de la largeur limitée de la meule de rectification qui est généralement inférieure à la longueur de l'ébauche du corps de vanne.

Ce procédé de rectification en plongée s'avère donc coûteux en temps-machine, en main-d'ceuvre, ainsi qu'en contrôles.

Par conséquent, la réalisation d'un corps de vanne à épaulement saillant s'avère jusque là coûteuse tant lors de l'ébauche que lors de la rectification pour parvenir à un corps de vanne qui satisfait les conditions de qualité géométrique et dimensionnelle. Cette qualité géométrique et dimensionnelle reste cependant nécessaire à la fonction même du corps de vanne dans l'électrovanne, pour assurer une bonne circulation du fluide dans le circuit hydraulique, sans fuites ni défauts dans la commande de son débit.

On connaît par ailleurs, du document DE 38 14 156 A1 et de son équivalent US 4,979,542 A, une électrovanne (figure 2) dans laquelle l'actionneur est accouplé au corps de vanne par une enveloppe en prise sur un épaulement lui-même constitué d'une pièce de révolution rapportée sur le corps de vanne et fixée par un rabattement de matière. On évite ainsi les étapes de rectification en plongée, grâce à l'absence d'un épaulement saillant monobloc sur le corps de vanne. Mais il est nécessaire de prévoir l'opération supplémentaire et onéreuse de rabattement de matière pour fixer la pièce de révolution rapportée sur le corps de vanne. En outre, la tenue mécanique du rabattement de matière n'est pas garantie, et il en résulte un risque d'apparition progressive de jeu et de rupture de l'accouplement. De plus, la pièce de révolution rapportée a une forme complexe, ce qui augmente le coût de fabrication.

### EXPOSE DE L'INVENTION

Un premier problème proposé par l'invention est de concevoir une structure d'électrovanne qui puisse être réalisée à moindre coût, en réduisant les pertes de matière, le temps de main-d'oeuvre ou encore le temps-machine.

Selon un autre aspect, l'invention vise à réaliser une telle électrovanne dans laquelle le corps de vanne reste compatible avec les exigences géométriques et dimensionnelles actuelles, et dans laquelle la force d'actionnement produite par l'actionneur électromagnétique reste compatible avec les besoins d'actionnement fiable de l'obturateur pour commander le fluide en toutes circonstances.

Simultanément, l'invention cherche en outre à réaliser un épaulement sur un corps de vanne qui soit fiable et qui puisse aisément endurer les contraintes mécaniques liées au fonctionnement de l'électrovanne.

Pour atteindre ces objets, ainsi que d'autres, l'invention propose une électrovanne pour la commande de débit d'un fluide dans un circuit hydraulique, comprenant :
- un corps de vanne, ayant au moins un passage de fluide, au moins une gorge périphérique, un obturateur pour autoriser ou empêcher le débit de fluide dans le passage de fluide, et une liaison mécanique pour actionner l'obturateur,
- un actionneur électromagnétique, agencé pour actionner la liaison mécanique,
- un accouplement entre l'actionneur électromagnétique et le corps de vanne, par une enveloppe entourant l'actionneur électromagnétique et en prise sur un épaulement rapporté sur le corps de vanne, qui maintient l'actionneur électromagnétique en engagement axial contre le corps de vanne selon une direction d'engagement,
- l'épaulement comprenant un assemblage de deux demi rondelles complémentaires, engagées radialement dans la gorge périphérique et retenues radialement dans la gorge périphérique par l'enveloppe.

Avec une telle structure d'électrovanne, on peut alors réaliser une économie substantielle du coût de fabrication et d'assemblage, en fabriquant séparément le corps de vanne lui-même et les demi rondelles complémentaires de retenue à partir de pièces de plus petites dimensions, sans pertes de matière importantes. Les demi rondelles constituent des pièces dont la forme simple est réalisable à faible coût. L'ébauche de corps de vanne, alors dépourvue d'épaulement, peut être rectifiée à moindre coût par un procédé de rectification en enfilade. Lors de l'assemblage, l'adaptation de l'enveloppe après insertion des demi rondelles complémentaires dans la gorge périphérique assure simultanément, en une seule opération, la fixation des demi rondelles sur le corps de vanne et la fixation de l'actionneur électromagnétique sur le corps de vanne.

Avantageusement, l'invention permet encore l'accouplement d'un actionneur électromagnétique dont le diamètre extérieur peut être nettement supérieur au diamètre extérieur du corps de vanne autour de la direction d'engagement.

Le corps de vanne ainsi muni de son épaulement rapporté est utilisable avec un actionneur électromagnétique de grandes dimensions, notamment dans le cas où une force d'actionnement importante est nécessaire dans les conditions d'utilisation de l'électrovanne ainsi constituée.

Cette réalisation s'avère en outre rapide, et l'épaulement ainsi réalisé sera à même d'endurer de très fortes contraintes mécaniques lors du fonctionnement de l'électrovanne.

Avantageusement, le corps de vanne peut présenter une forme générale extérieure cylindrique de révolution.

Ainsi, la rectification de l'ébauche pourra s'effectuer par un procédé de rectification en enfilade et non plus par un procédé de rectification en plongée. Le procédé de rectification en enfilade s'avère moins onéreux et plus simple à mettre en oeuvre que le procédé de rectification en plongée.

Selon un mode de réalisation de l'invention, l'actionneur électromagnétique peut comprendre :
- un bobinage de forme générale cylindrique définissant en son centre un logement cylindrique entre une première et une seconde extrémités, le long de la direction d'engagement,
- un carter, disposé autour du bobinage, obstruant le logement cylindrique du bobinage selon la première extrémité et maintenant une rondelle en matériau ferromagnétique contre la première extrémité pour constituer un premier pôle du circuit magnétique,
- un noyau magnétique mobile en translation longitudinale dans le logement cylindrique du bobinage.

Le carter peut être en matière plastique ce qui permet d'alléger sensiblement l'électrovanne ainsi constituée, et ce qui réduit les coûts de production.

De préférence, la liaison mécanique peut comprendre une tige, coulissant dans un alésage cylindrique axial du corps de vanne pour actionner l'obturateur lors des déplacements du noyau magnétique mobile.

De manière avantageuse, le corps de vanne peut comporter un nez axial engagé partiellement dans le logement cylindrique du bobinage et formant un second pôle du circuit magnétique.

Le montage de l'électrovanne est ainsi facilité, le nez axial assurant un centrage aisé du corps de vanne par rapport au bobinage de l'actionneur électromagnétique. Dans le cas où le corps de vanne est constitué d'un matériau ferromagnétique, celui-ci vient ainsi fermer efficacement la boucle magnétique de l'actionneur électromagnétique pour lui assurer un excellent fonctionnement.

Selon l'invention, le nez axial peut être un noyau fixe en matériau ferromagnétique rapporté en bout du corps de vanne.

Ceci permet notamment d'utiliser, pour constituer le corps de vanne, un matériau plus adapté aux exigences particulières de l'utilisation de l'électrovanne, sans pour autant compromettre le bon fonctionnement de celle-ci. On pourra par exemple réaliser le corps de vanne en aluminium dans le but de réduire le poids de l'électrovanne.

Avantageusement, le noyau fixe peut être retenu sur l'actionneur électromagnétique par au moins une pièce de retenue de noyau rapportée et fixée en périphérie du noyau fixe et maintenue par l'enveloppe.

Le montage du noyau fixe est ainsi simple, sûr et peu onéreux puisque la réalisation d'un épaulement n'est alors pas nécessaire, et on en tire les mêmes avantages que lors de la réalisation de l'épaulement sur le corps de vanne au moyen d'une pièce de retenue rapportée.

Dans ce cas, la pièce de retenue de noyau peut être en matériau ferromagnétique pour relier magnétiquement le noyau fixe à l'enveloppe, le corps de vanne étant en matériau non magnétique.

En alternative, le corps de vanne peut être en matériau ferromagnétique, et l'une au moins des demi rondelles complémentaires est en matériau ferromagnétique pour relier magnétiquement le corps de vanne à l'enveloppe.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en coupe d'une électrovanne selon un mode de réalisation de l'invention; et
- la figure 2 est une vue en perspective montrant l'assemblage des deux demi rondelles complémentaires sur un corps de vanne, dans le mode de réalisation de la figure 1.

### DESCRIPTION DES MODES DE REALISATION PREFERES

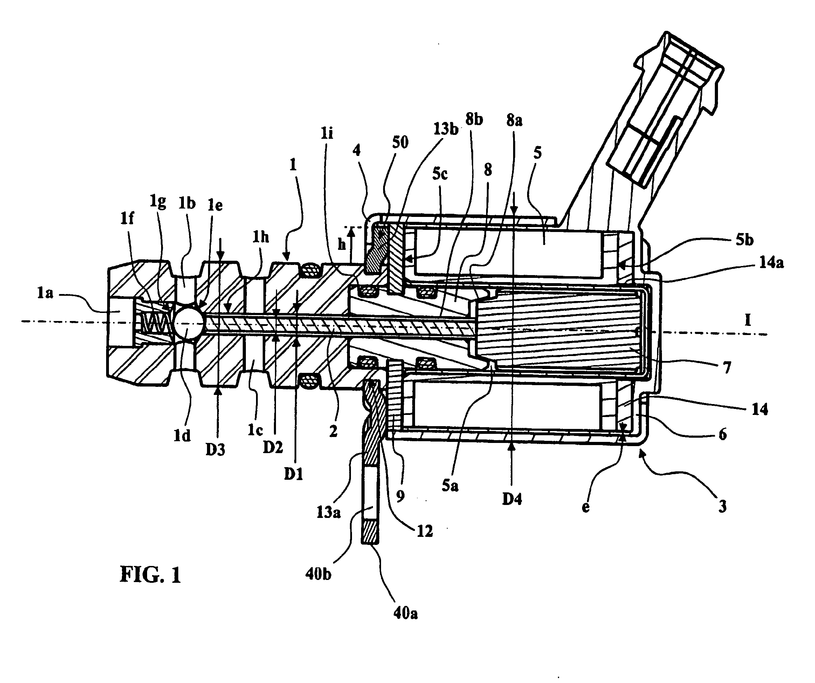

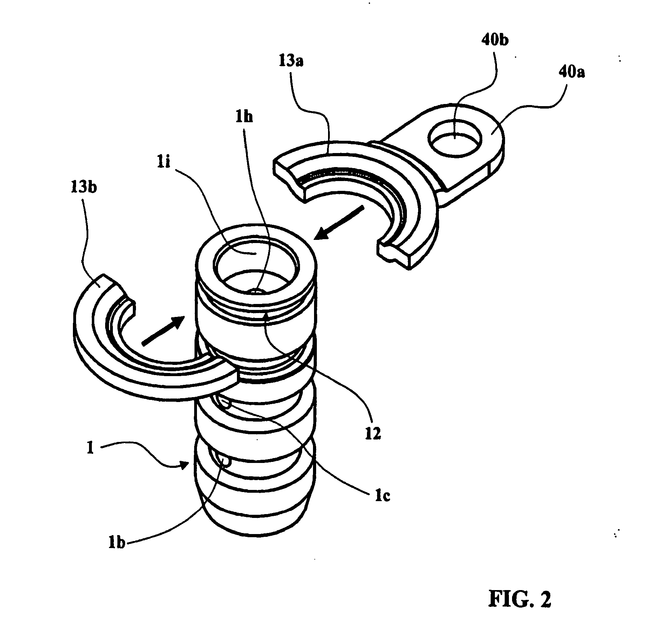

Dans le mode de réalisation représenté sur les figures 1 et 2, une électrovanne pour la commande de débit d'un fluide dans un circuit hydraulique selon l'invention comporte notamment un corps de vanne 1 muni d'un passage de fluide axial 1a et de deux passages de fluide transversaux 1b et 1c. Le corps de vanne 1 comprend un obturateur 1d en forme de bille pour autoriser ou empêcher le débit de fluide dans les passages de fluides 1a, 1b et 1c. La bille 1d est maintenue en appui contre un premier siège 1e par un ressort 1f. La bille 1d peut cependant être repoussée à l'écart du premier siège 1e contre un second siège 1 g opposé.

Lorsque la bille 1d est en appui contre le premier siège 1e, celle-ci empêche toute communication entre le passage de fluide transversal 1b et le passage de fluide transversal 1c. Le fluide peut alors circuler entre le passage transversal 1b et le passage axial 1a. En revanche, quand la bille 1d est en appui contre le deuxième siège 1 g, celle-ci obture le passage de fluide axial 1a et autorise la circulation de fluide entre les passages de fluide transversaux 1b et 1c par un alésage cylindrique axial 1h dans lequel est engagée avec jeu une tige 2.

Cette circulation de fluide entre les passages de fluide transversaux 1b et 1c est rendue possible par la différence entre le diamètre D1 de l'alésage cylindrique axial 1h du corps 1 et le diamètre D2 de la tige 2 qui est engagée à coulissement dans l'alésage cylindrique axial 1h pour venir actionner la bille 1d.

L'électrovanne comporte également un actionneur électromagnétique 3, agencé pour actionner la tige 2 qui constitue elle-même une liaison mécanique.

Un accouplement est prévu entre l'actionneur électromagnétique 3 et le corps de vanne 1. Cet accouplement comprend une enveloppe 4 entourant l'actionneur électromagnétique 3 et en prise sur un épaulement 50 rapporté sur le corps de vanne 1. Cette enveloppe 4 maintient ainsi l'actionneur électromagnétique 3 en engagement axial contre le corps de vanne 1 selon une direction d'engagement 1-1.

Selon l'invention, le corps de vanne 1 comporte à son extrémité une gorge périphérique 12. L'épaulement 50 de retenue de corps comprend un assemblage de deux demi rondelles 13a et 13b complémentaires, engagées radialement dans la gorge périphérique 12 comme représenté sur la figure 2. Les demi rondelles 13a et 13b sont ensuite retenues radialement dans la gorge périphérique 12 par l'enveloppe 4, comme illustré sur la figure 1.

Cette réalisation de l'épaulement 50 de retenue de corps rapporté s'avère de mise en oeuvre simple, rapide et peu onéreuse.

En particulier, cela permet la réalisation à moindre coût d'un corps de vanne 1 de forme générale extérieure cylindrique de révolution.

Ceci évite en effet de nombreuses opérations coûteuses d'usinage, et cela permet d'économiser une grande quantité de matière.

En outre, une telle forme générale extérieure cylindrique de révolution du corps de vanne 1 permet une rectification en enfilade, qui est beaucoup moins onéreuse que la rectification en plongée qui était utilisée jusqu'alors.

Le diamètre extérieur D3 du corps de vanne 1 est propre à l'utilisation de l'électrovanne. Le corps de vanne 1 peut par exemple être engagé dans un alésage d'un bloc-moteur pour commander le débit d'un fluide dans un circuit hydraulique pratiqué dans ce bloc-moteur. L'alésage du bloc-moteur détermine donc directement le diamètre extérieur D3 qu'il faut donner au corps de vanne 1.

Quant à l'actionneur électromagnétique 3, celui-ci présente un diamètre extérieur D4 qui est fonction de la force qu'il est nécessaire d'appliquer sur la bille 1d pour commander le débit du fluide dans le circuit hydraulique. Cette force dépend donc de la force de rappel exercée par le ressort 1f, et de la pression du fluide en circulation dans les passages 1a, 1b et 1c. Ainsi, la force d'actionnement est propre à l'utilisation que l'on souhaite faire de l'électrovanne, et le diamètre extérieur D4 en dépend.

On soulignera que les diamètres extérieurs D3 et D4 peuvent être par conséquent très différents. L'épaulement 50 peut ainsi présenter une hauteur h pouvant être importante, et selon l'invention cela n'augmente pas le coût de fabrication de l'électrovanne. Au contraire, avec les techniques utilisées jusqu'à ce jour, la réalisation d'un corps de vanne cylindrique de révolution massif s'avère d'autant plus onéreuse que la hauteur h est importante.

L'actionneur électromagnétique 3 comporte un bobinage 5 de forme générale cylindrique définissant en son centre un logement cylindrique 5a entre une première extrémité 5b et une seconde extrémité 5c, le long de la direction d'engagement I-I.

L'actionneur électromagnétique 3 comprend en outre un carter 6 disposé autour du bobinage 5, obstruant le logement cylindrique 5a du bobinage 5 selon la première extrémité 5b. Le carter 6 peut être en matière plastique, et il maintient une rondelle 14 en matériau ferromagnétique contre la première extrémité 5b pour constituer un premier pôle 14a du circuit magnétique. L'enveloppe 4 peut avantageusement être en matériau ferromagnétique, et constitue ainsi la pièce principale d'armature pour conduire le champ magnétique produit par le bobinage 5.

Le carter 6 en matière plastique présente une faible épaisseur e séparant l'enveloppe 4 en matériau ferromagnétique et la rondelle 14 de telle sorte qu'une conduction magnétique est possible entre ces deux éléments. Il est aussi possible, pour améliorer cette conduction magnétique, que la rondelle 14 comporte une denture périphérique engagée dans des rainures pratiquées sur toute la longueur du carter plastique 6, denture qui vient alors en contact sans entrefer avec l'enveloppe 4.

Un noyau magnétique 7 est monté mobile en translation longitudinale selon la direction d'engagement I-I dans le logement cylindrique 5a du bobinage 5.

La tige 2 est en appui axial contre le noyau magnétique 7 mobile et coulisse dans l'alésage cylindrique axial 1h du corps de vanne 1 sous la poussée du noyau magnétique 7 mobile lorsque celui-ci coulisse dans le logement cylindrique 5a du bobinage 5. On actionne ainsi la bille 1d pour autoriser ou empêcher le débit de fluide dans les passages 1a, 1b et 1c.

Dans les modes de réalisation des figures 1 à 2, le déplacement du noyau magnétique 7 mobile dans le logement cylindrique 5a du bobinage 5 est limité par un noyau fixe 8 en matériau ferromagnétique. Ce noyau fixe 8 est engagé partiellement dans le logement cylindrique 5a du bobinage 5 et forme un second pôle 8a du circuit magnétique. Il est percé d'un alésage axial 8b pour le libre coulissement de la tige 2.

Ce noyau fixe 8 est retenu sur l'actionneur électromagnétique 3 par une pièce 9 de retenue de noyau, rapportée et fixée en périphérie du noyau fixe 8 et maintenue par l'enveloppe 4.

La pièce 9 de retenue de noyau peut avantageusement être en matériau ferromagnétique, reliant magnétiquement l'enveloppe 4 au noyau fixe 8 qui peut aussi être en matériau ferromagnétique. Une boucle magnétique est ainsi constituée par l'enveloppe 4, la pièce 9 de retenue de noyau, le noyau fixe 8 et la rondelle 14. Cette boucle magnétique permet de canaliser le champ magnétique produit par le bobinage 5 pour générer une force d'actionnement afin de déplacer le noyau magnétique 7 mobile dans le logement cylindrique 5a.

Lors de l'alimentation du bobinage 5, le noyau magnétique 7 mobile se déplace dans le logement cylindrique 5a vers le noyau fixe 8 selon la direction d'engagement I-I et fait ainsi coulisser la tige 2 dans l'alésage cylindrique axial 1h du corps de vanne 1 et dans l'alésage axial 8b du noyau fixe 8 pour repousser la bille 1d à l'encontre de la force de rappel exercée par le ressort 1 f. La bille 1d vient ainsi obturer le deuxième siège 1 g pour empêcher la circulation de fluide dans le passage axial 1a et pour autoriser alors le passage de fluide dans les passages transversaux 1b et 1c, le fluide pouvant circuler dans l'alésage cylindrique axial 1h du fait du diamètre D1 de la tige 2 qui est inférieur au diamètre intérieur de l'alésage cylindrique axial 1h.

Lorsque le bobinage 5 n'est plus alimenté, celui-ci n'exerce aucune force d'actionnement sur le noyau magnétique 7 mobile, et le ressort 1f repousse la bille 1d contre le premier siège 1e en faisant coulisser la tige 2 dans l'alésage cylindrique axial 1h et le noyau magnétique 7 mobile dans le logement cylindrique 5a vers le premier pôle 14a selon la direction d'engagement I-I.

Dans le mode de réalisation illustré sur la figure 1, le diamètre extérieur D3 du corps de vanne 1 est supérieur au diamètre du logement cylindrique 5a. Dans ce cas, le noyau fixe 8 a un diamètre inférieur, adapté pour obturer le logement cylindrique 5a selon la seconde extrémité 5c du bobinage 5 en assurant le centrage du corps de vanne 1 sur l'actionneur électromagnétique 3. Le noyau fixe 8 est engagé par son autre extrémité, dans un logement axial 1i correspondant du corps de vanne 1.

Cependant, si le diamètre extérieur D3 était égal au diamètre du logement cylindrique 5a du bobinage 5, on pourrait envisager que le corps de vanne 1 comporte lui-même un nez axial engagé partiellement dans le logement cylindrique 5a du bobinage 5 et formant le second pôle 8a du circuit magnétique. Afin de fermer la boucle magnétique, le corps de vanne 1 ainsi que l'une au moins des demi rondelles 13a, 13b complémentaires de retenue de corps 1 seraient alors constitués en matériau ferromagnétique.

L'utilisation d'un noyau fixe 8 est ainsi utile d'une part lorsque le diamètre extérieur D3 du corps 1 est différent du diamètre du logement cylindrique 5a, et d'autre part lorsque l'on souhaite réaliser un corps de vanne 1 en une matière non ferromagnétique, en aluminium par exemple, dans le but d'alléger l'électrovanne, ou parce que dans le cadre de l'utilisation de l'électrovanne, une matière particulière non ferromagnétique est exigée pour le corps de vanne 1.

Dans le mode de réalisation particulier représenté sur les figures, l'une des demi rondelles complémentaires, en l'occurrence la demi rondelle 13a, se prolonge radialement pour constituer elle-même une patte de fixation 40a de l'électrovanne. La patte de fixation 40a est par exemple percée d'un trou 40b de passage de vis de fixation. La patte de fixation 40a se trouve à l'interface entre le corps de vanne 1 et l'actionneur électromagnétique 3, et peut venir en appui sur la face externe d'un bloc hydraulique où est inséré le corps de vanne 1.

Dans le mode de réalisation illustré sur les figures, le carter 6 est en matériau léger et peu onéreux, par exemple en matière plastique.

Cependant, on peut concevoir, en cas de besoin, de réaliser le carter 6 en matériau ferromagnétique. Le carter 6 participe alors à la conduction du champ magnétique dans la boucle magnétique.

On favorise ainsi l'obtention d'une force d'actionnement plus importante.

La présente invention n'est pas limitée aux modes de réalisation qui ont été explicitement décrits, mais elle en inclut les diverses variantes et généralisations contenues dans le domaine des revendications ci-après.

## Revendications

1. - Electrovanne pour la commande de débit d'un fluide dans un circuit hydraulique, comprenant :
- un corps de vanne (1), ayant au moins un passage de fluide (1a-1c), au moins une gorge périphérique (12), un obturateur (1d) pour autoriser ou empêcher le débit de fluide dans le passage de fluide (1a-1c), et une liaison mécanique (2) pour actionner l'obturateur,
- un actionneur électromagnétique (3), agencé pour actionner la liaison mécanique (2),
- un accouplement entre l'actionneur électromagnétique (3) et le corps de vanne (1), par une enveloppe (4) entourant l'actionneur électromagnétique (3) et en prise sur un épaulement (50) rapporté sur le corps de vanne (1), qui maintient l'actionneur électromagnétique (3) en engagement axial contre le corps de vanne (1) selon une direction d'engagement (I-I),
**caractérisée en ce que** l'épaulement (50) comprend un assemblage de deux demi rondelles (13a, 13b) complémentaires, engagées radialement dans la gorge périphérique (12) et retenues radialement dans la gorge périphérique (12) par l'enveloppe (4).

2. - Electrovanne selon la revendication 1, **caractérisée en ce que** le diamètre extérieur (D4) de l'actionneur électromagnétique (3) est nettement supérieur au diamètre extérieur (D3) du corps de vanne (1) autour de la direction d'engagement (I-I).

3. - Electrovanne selon l'une des revendications 1 ou 2, **caractérisée en ce que** le corps de vanne (1) présente une forme générale extérieure cylindrique de révolution.

4. - Electrovanne selon l'une quelconque des revendications 1 à 3, **caractérisée en ce que** l'actionneur électromagnétique (3) comprend :
- un bobinage (5) de forme générale cylindrique définissant en son centre un logement cylindrique (5a) entre une première (5b) et une seconde (5c) extrémités, le long de la direction d'engagement (I-I),
- un carter (6), disposé autour du bobinage (5), obstruant le logement cylindrique (5a) du bobinage (5) selon la première extrémité (5b) et maintenant une rondelle (14) en matériau ferromagnétique contre la première extrémité (5b) pour constituer un premier pôle (14a) du circuit magnétique,
- un noyau magnétique (7) mobile en translation longitudinale dans le logement cylindrique (5a) du bobinage (5).

5. - Electrovanne selon la revendication 4, **caractérisée en ce que** la liaison mécanique comprend une tige (2), coulissant dans un alésage cylindrique axial (1h) du corps de vanne (1) pour actionner l'obturateur (1d) lors des déplacements du noyau magnétique (7) mobile.

6. - Electrovanne selon l'une des revendications 4 ou 5, **caractérisée en ce que** le corps de vanne (1) comporte un nez axial engagé partiellement dans le logement cylindrique (5a) du bobinage (5) et formant un second pôle (8a) du circuit magnétique.

7. - Electrovanne selon la revendication 6, **caractérisée en ce que** le nez axial est un noyau fixe (8) en matériau ferromagnétique rapporté en bout du corps de vanne (1).

8. - Electrovanne selon la revendication 7, **caractérisée en ce que** le noyau fixe (8) est retenu sur l'actionneur électromagnétique (3) par au moins une pièce (9) de retenue de noyau, rapportée et fixée en périphérie du noyau fixe (8) et maintenue par l'enveloppe (4).

9. - Electrovanne selon la revendication 8, **caractérisée en ce que** ladite au moins une pièce (9) de retenue de noyau est en matériau ferromagnétique et relie magnétiquement le noyau fixe (8) à l'enveloppe (4), le corps de vanne (1) étant en matériau non magnétique.

10. - Electrovanne selon l'une des revendications 4 ou 5, **caractérisée en ce que** le corps de vanne (1) est en matériau ferromagnétique, et l'une au moins des demi rondelles (13a, 13b) complémentaires est en matériau ferromagnétique et relie magnétiquement le corps de vanne (1) à l'enveloppe (4).

11. - Electrovanne selon l'une quelconque des revendications 1 à 10, **caractérisée en ce que** l'une au moins desdites demi rondelles (13a, 13b) complémentaires se prolonge radialement pour constituer une patte de fixation (40a) de l'électrovanne.

## Claims

1. Solenoid valve for controlling the flow of a fluid in a hydraulic circuit, comprising:
- a valve body (1), having at least one fluid duct (1a-1c), at least one peripheral groove (12), a stopper (1d) for allowing or preventing the flow of fluid in the fluid duct (1a-1c) and a mechanical connection (2) to actuate the stopper,
- an electromagnetic actuator (3) arranged to actuate the mechanical connection (2),
- a coupling between the electromagnetic actuator (3) and the valve body (1), via a jacket (4) surrounding the electromagnetic actuator (3) and engaged with a shoulder (50) fitted to the valve body (1), that holds the electromagnetic actuator (3) in axial engagement against the valve body (1) in a direction of engagement (I-I),
**characterized in that** the shoulder (50) comprises an assembly of two matching half-washers (13a, 13b), engaged radially in the peripheral groove (12) and held radially in the peripheral groove (12) by the jacket (4).

2. Solenoid valve according to claim 1, **characterized in that** the external diameter (D4) of the electromagnetic actuator (3) is markedly greater than the external diameter (D3) of the valve body (1) around the direction of engagement (I-I).

3. Solenoid valve according to one of claim 1 or claim 2, **characterized in that** the valve body (1) has a generally axi-symmetric outer cylindrical shape.

4. Solenoid valve according to any one of claims 1 to 3, **characterized in that** the electromagnetic actuator (3) comprises :
- a generally cylinder-shaped winding (5) defining at its center a cylindrical housing (5a) between a first end (5b) and a second end (5c) along the direction of engagement (I-I),
- a casing (6), placed around the winding (5), closing off the cylindrical housing (5a) of the winding (5) on the first end (5b) and holding a ferromagnetic washer (14) against the first end (5b) to form a first pole (14a) of the magnetic circuit,
- a magnetic core (7) that can be moved in longitudinal translation in the cylindrical housing (5a) of the winding (5).

5. Solenoid valve according to claim 4, **characterized in that** the mechanical connection comprises a rod (2), sliding in an axial cylindrical bore (1h) of the valve body (1) to actuate the stopper (1d) during the movements of the movable magnetic core (7).

6. Solenoid valve according to one of claims 4 or 5, **characterized in that** the valve body (1) comprises an axial nose partially engaged in the cylindrical housing (5a) of the winding (5) and forming a second pole (8a) of the magnetic circuit.

7. Solenoid valve according to claim 6, **characterized in that** the axial nose is a fixed ferromagnetic core (8) fitted at the end of the valve body (1).

8. Solenoid valve according to claim 7, **characterized in that** the fixed core (8) is held on the electromagnetic actuator (3) by at least one core retaining piece (9), fitted and attached on the periphery of the fixed core (8) and held by the jacket (4).

9. Solenoid valve according to claim 8, **characterized in that** the said at least one core retaining piece (9) is made of ferromagnetic material and magnetically connects the fixed core (8) to the jacket (4), the valve body (1) being made of nonmagnetic material.

10. Solenoid valve according to one of claims 4 or 5, **characterized in that** the valve body (1) is made of ferromagnetic material, and at least one of the matching half-washers (13a, 13b) is made of ferromagnetic material and magnetically connects the valve body (1) to the jacket (4).

11. Solenoid valve according to any one of claims 1 to 10, **characterized in that** at least one of the said matching half-washers (13a, 13b) is extended radially to form an attachment lug (40a) of the solenoid valve.

## Patentansprüche

1. - Elektromagnetventil zur Steuerung des Durchflusses eines Fluides in einem Hydraulikkreis, mit:
- einem Ventilkörper (1), der mindestens eine Fluidpassage (1a-1c), mindestens eine Umfangsnut (12), einen Verschluß (1d) zum Gestatten oder Verhindern des Durchflusses des Fluides in der Fluidpassage (1a-1c), und eine mechanische Verbindung (2) zum Betätigen des Verschlusses,
- einem elektromagnetischen Betätigungsorgan (3), das zur Betätigung der mechanischen Verbindung (2) angeordnet ist,
- einer Kopplung zwischen dem elektromagnetischen Betätigungsorgan (3) und dem Ventilkörper (1) mittels einer Hülse (4), die das elektromagnetische Betätigungsorgan (3) umgibt und mit einer Schulter (50) in Eingriff steht, die an dem Ventilkörper (1) angebracht ist, die das elektromagnetische Betätigungsorgan (3) in axialer Ausrichtung gegen den Ventilkörper (1) in einer Eingriffsrichtung (I-I) hält,
**dadurch gekennzeichnet,**
**daß** die Schulter (50) eine Anordnung von zwei halben komplementären Scheiben (13a, 13b) aufweist, die radial in die Umfangsnut (12) eingreifen und radial in der Umfangsnut (12) mittels der Hülse (4) gehalten sind.

2. - Elektromagnetventil nach Anspruch 1, **dadurch gekennzeichnet,**
**daß** der Außendurchmesser (D4) des elektromagnetischen Betätigungsorgans (3) deutlich größer ist als der Außendurchmesser (D3) des Ventilkörpers (1) um die Eingriffsrichtung (I-I).

3. - Elektromagnetventil nach Anspruch 1 oder 2, **dadurch gekennzeichnet,**
**daß** der Ventilkörper (1) generell die Außenform eines rotationssymmetrischen Zylinders hat.

4. - Elektromagnetventil nach irgendeinem der Ansprüche 1 bis 3, **dadurch gekennzeichnet,**
**daß** das elektromagnetische Betätigungsorgan (3) aufweist:
- eine Spule (5) mit generell zylindrischer Form, die in ihrer Mitte eine zylindrische Aufnahme (5a) zwischen einem ersten (5b) und einem zweiten (5c) Ende längs der Eingriffsrichtung (I-I) bildet,
- ein Gehäuse (6), das um die Spule (5) herum angeordnet ist, die zylindrische Aufnahme (5a) der Spule (5) an einem ersten Ende (5b) abschließt und eine Scheibe (14) aus ferromagnetischem Material gegen das erste Ende (5b) hält, um einen ersten Pol (14a) des magnetischen Kreises zu bilden,
- einen magnetischen Kern (7), der in Längsrichtung der zylindrischen Aufnahme (5a) der Spule (5) translatorisch beweglich ist.

5. - Elektromagnetventil nach Anspruch 4, **dadurch gekennzeichnet,**
**daß** die mechanische Verbindung eine Stange (2) aufweist, die in einer axialen zylindrischen Bohrung (1h) des Ventilkörpers (1) gleitet, um den Verschluß (1d) bei Verschiebungen des beweglichen magnetischen Kerns (7) zu betätigen.

6. - Elektromagnetventil nach einem der Ansprüche 4 oder 5, **dadurch gekennzeichnet,**
**daß** der Ventilkörper (1) eine axiale Nase aufweist, die teilweise in die zylindrische Aufnahme (5a) der Spule (5) eingreift und einen zweiten Pol (8a) des magnetischen Kreises bildet.

7. - Elektromagnetventil nach Anspruch 6, **dadurch gekennzeichnet,**
**daß** die axiale Nase ein fester ferromagnetischer Kern (8) ist, der am Ende des Ventilkörpers (1) befestigt ist.

8. - Elektromagnetventil nach Anspruch 7, **dadurch gekennzeichnet,**
**daß** der feste Kern (8) an dem elektromagnetischen Betätigungsorgan (3) mittels mindestens eines Teiles (9) zum Halten des Kernes gehalten ist, das am Umfang des festen Kernes (8) angebracht und befestigt ist und von der Hülse (4) gehalten ist.

9. - Elektromagnetventil nach Anspruch 8, **dadurch gekennzeichnet,**
**daß** das mindestens eine Teil (9) zum Halten des Kernes aus ferromagnetischem Material ist und den festen Kern (8) magnetisch mit der Hülse (4) verbindet, wobei der Ventilkörper (1) aus nichtmagnetischem Material ist.

10. - Elektromagnetventil nach einem der Ansprüche 4 oder 5, **dadurch gekennzeichnet,**
**daß** der Ventilkörper (1) aus ferromagnetischem Material ist, und mindestens eine der komplementären halben Scheiben (13a, 13b) aus ferromagnetischem Material ist und den Ventilkörper (1) mit der Hülse (4) magnetisch verbindet.

11. - Elektromagnetventil nach irgendeinem der Ansprüche 1 bis 10, **dadurch gekennzeichnet,**
**daß** mindestens eine der genannten halben komplementären Scheiben (13a, 13b) radial verlängert ist, um eine Befestigungsklaue (40a) des Magnetventiles zu bilden.
